# EUROPÄISCHE PATENTSCHRIFT

(11) **EP 1 254 809 B1**
(45) Veröffentlichungstag und Bekanntmachung des Hinweises auf die Patenterteilung: **07.07.2004**
(21) Anmeldenummer: 02008537.9
(22) Anmeldetag: 16.04.2002
(51) Int. Cl.: B60R 7/02, B60R 7/08, B60P 7/08, B61D 45/00

(54) **Haltevorrichtung zur lösbaren Befestigung eines Halterings auf einer Trägerplatte**
Holding device for releasably fastening a retaining ring to a carrier plate
Dispositif de maintien pour la fixation détachable d'un bague de support sur une plaque d'appui

(30) Priorität: 28.04.2001 DE 10121110
(43) Veröffentlichungstag der Anmeldung: 06.11.2002
(73) Patentinhaber: A. Raymond & Cie, 38028 Grenoble (FR)
(72) Erfinder: Motsch, Uwe, 79618 Rheinfelden (DE)
(74) Vertreter: Rüttgers, Joachim, Dr.

(56) Entgegenhaltungen:
- DE-U- 20 020 514
- DE-U- 29 816 126
- US-A- 5 180 263

## Beschreibung

Die Erfindung bezieht sich auf eine Haltevorrichtung zur lösbaren Befestigung eines Halterings auf einer Trägerplatte. Derartige Haltevorrichtungen werden beispielsweise im Kofferraumbereich von Kraftfahrzeugen angebracht, um mittels Spannbänder das Gepäck zu verzurren. Die Haltevorrichtung besteht hierbei üblicherweise aus einer den Haltering schwenkbar einlagernden Schelle mit auf der Trägerplatte anschraubbaren Fußplatten, wobei das Anschrauben relativ kostspielig ist. Auch wird es als Nachteil empfunden, dass diese Haltevorrichtung nach dem Festschrauben im Bedarfsfall nur sehr mühsam wieder entfernt werden kann.

Dokument DE 200 20514 U1 offenbart eine Haltevorrichtung zur lösbaren Befestigung eines Halterings auf einer Trägerplatte.

Aufgabe der Erfindung ist es, eine Haltevorrichtung zu schaffen, die einerseits leicht zu montieren und sehr stabil ist und andererseits bei Bedarf schnell wieder entfernt werden kann, wenn beispielsweise der dafür vorgesehene Platz im Kofferraum anderweitig benötigt wird.

Diese Aufgabe wird nach der Erfindung durch eine Haltevorrichtung gelöst, welche aus folgenden Teilen besteht: aus einer Haltelasche mit zwei den Haltering schwenkbar einlagernden, zusammenfaltbaren Blechlappen und an den freien Enden rechtwinklig voneinander wegstrebenden Fußschenkeln, einem mit der Trägerplatte verbindbaren Halteblech mit zwei aus der Blechebene ausgestanzten und entsprechend der Breite der Fußschenkel hochgebogenen Führungsschienen zum Einschieben der Fußschenkel sowie einer die Außenkanten der zusammengefalteten Blechlappen umfassenden und auf diesen verschieblichen Verriegelungsklammer zwecks Verriegelung der Halteposition nach dem Einschieben der Fußplatten. Die Halteplatte wird hierbei zweckmäßigerweise vor dem Lackiervorgang auf der Trägerplatte angeschweißt. Sodann kann die Haltelasche, welche nach dem Einlagern des Halteringes von der Verriegelungsklammer an den Außenkanten eingefaßt ist, mit ihren Fußplatten die Führungsschienen eingeschoben werden.

Zur sicheren Positionierung der Haltelasche sind die Führungsschienen mit ihren gegeneinandergerichteten Schenkeln etwa in der Mitte des Halteblechs mit Aussparungen versehen, in welche die die Kanten der Blechlappen umfassenden Klemmschenkel der Verriegelungsklammer nach dem Einschieben der Haltelasche in die Führungsschienen zur Sicherung der Halteposition eingeführt werden.

Die Verriegelungsklammer weist nach einem weiteren Merkmal der Erfindung an ihrem freien oberen Ende einen U-förmig zurückgebogenen Schenkel auf, welcher sich in der Öffnungsstellung auf dem Lagerbereich der Haltelasche abstützt und in der Verriegelungsstellung diesen klemmend umfasst.

Zur Montage der Verriegelungsklammer auf den Außenkanten der zusammengefalteten Blechlappen sind an diesen Außenkanten unterhalb des Lagerbereichs Aussparungen vorgesehen, welche in Länge und Tiefe den Klemmschenkeln der Verriegelungsklammer entsprechen. Diese wird von oben mit dem zurückgebogenen Schenkel auf den Lagerbereich soweit heruntergedrückt, bis die Klemmschenkel durch die Aussparung hindurchtreten und entlang der zusammengefalteten Kanten der Blechlappen verschiebbar sind.

Um die Verriegelungsklammer in der Verriegelungsstellung arretieren zu können, sind an den beiden Außenkanten des zurückgebogenen Klemmschenkels nach innen abstehende Rasthaken angeformt, welche nach dem Herunterdrücken der Verriegelungsklammer in die Aussparungen der Haltelasche einrasten.

In der Zeichnung ist ein Ausführungsbeispiel der Erfindung dargestellt, welches nachfolgend näher erläutert wird. Es zeigt
- Fig. 1: Eine Haltelasche in Vorderansicht,
- Fig. 2: Die Haltelasche in Seitenansicht,
- Fig. 3: Eine Verriegelungsklammer in Vorderansicht,
- Fig. 4: Die Verriegelungsklammer in Seitenansicht,
- Fig. 5: Die Haltelasche mit Haltering, Verriegelungsklammer und Halteblech,
- Fig. 6: Die Haltelasche mit vormontierter Verriegelungsklammer vor dem Einschieben in das Halteblech,
- Fig. 7: Die vormontierte Haltelasche nach dem Einschieben in die Führungsschienen des Halteblechs und
- Fig. 8: Die eingeschobene Haltelasche nach der Verriegelung auf dem Halteblech

Die in den Figuren dargestellte Haltevorrichtung dient zur lösbaren Befestigung eines Halterings **4** auf einer Trägerplatte, wobei der Haltering beispielsweise zum Festzurren von Gepäckstücken mittels Spannbänder verwendet wird. Die Haltevorrichtung besteht hierbei aus einer Haltelasche **1**, einem Halteblech **2** und einer Verriegelungsklammer **3**, die im einzelnen wie folgt aufgebaut sind:

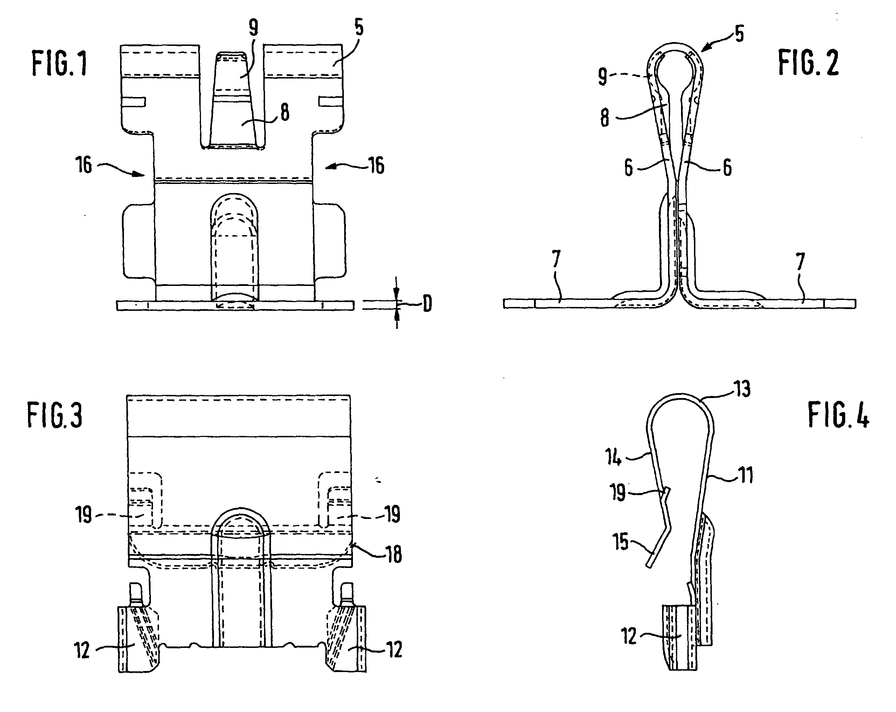

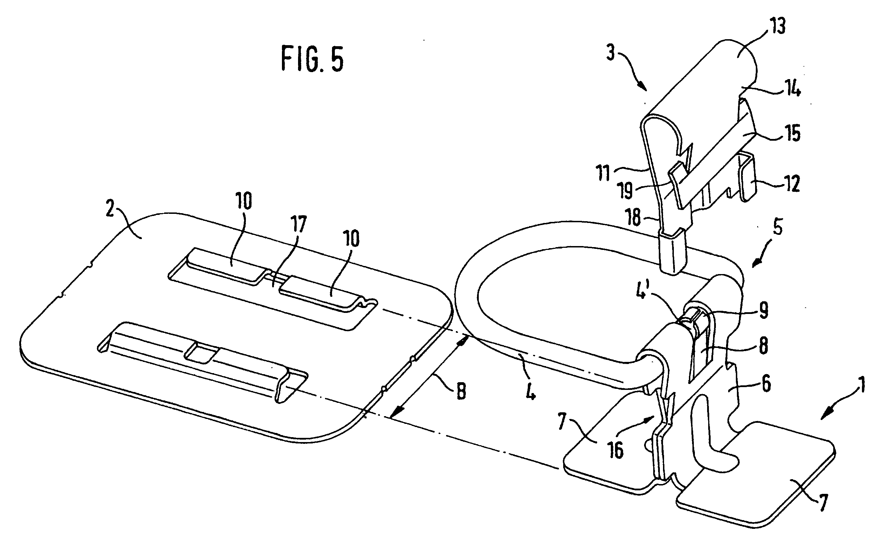

Die in den **Figuren 1 und 2** dargestellte Haltelasche **1** besteht aus einem Lagerbereich **5** zur schwenkbaren Einlagerung des Halterings **4** und zwei sich von dem Lagerbereich **5** erstreckenden, zusammengefalteten Blechlappen **6**, an deren freien Enden rechtwinklig voneinanderwegstrebende Fußschenkel **7** einstückig angeformt sind. Unterhalb des Lagerbereichs **5** sind in den Blechlappen **6** zwei Stützlappen **8** ausgestanzt, welche mit ihren auffederbaren Stützschalen **9** unterhalb des Lagerbereichs **5** enden. Diese Stützschalen **9** bilden einen Engpass, welcher beim Einlagern des Halterings **4** zunächst auseinandergedrückt wird und nach der Einlagerung eines geradlinigen Teils **4'** des Halterings **4** wieder zusammenfedert, wobei sich die Stützschalen **9** formschlüssig am Außenmantel des Halterings **4** anlegen (vgl. **Fig.5**).

Das in **Fig.5** links dargestellte Halteblech **2** ist mit zwei aus der Blechebene ausgeformten Führungsschienen **10** versehen, welche entsprechend der Breite **B** der Fußschenkel **7** hochgebogen und entsprechend der Dicke **D** der Fußschenkel **7** aufeinanderzu abgewinkelt sind, so dass sich die Haltelasche **1** mit den Fußschenkeln **7** über das Halteblech **2** zwischen den Führungsschienen **10** einschieben lässt.

Die in den **Figuren 3 und 4** dargestellte Verriegelungsklammer **3** besteht aus einer flachen Platte **11** von der Breite der Haltelasche **1**, an deren unterem Ende an beiden Außenkanten doppelt abgewinkelte Klemmschenkel **12** angeformt sind. Die aufeinanderzu gerichteten Klemmschenkel **12** haben einen solchen Abstand von der Platte **11**, dass diese die Außenkanten der zusammengefalteten Blechlappen **6** klemmend umfassen und gleichzeitig auf diesen verschieblich sind. Das obere Ende der Platte **11** ist zu einem halbzylinderförmigen Bereich **13** umgebogen, welcher dem Außendurchmesser des Lagerbereichs **5** konzentrisch angepasst ist. Von dem halbzylinderförmigen Bereich **13** ist ein weiterer Schenkel **14** zurückgebogen, wobei die Platte **11** und der Schenkel **14** entsprechend der Form der Haltelasche **1** bis auf einen Abstand von etwa der halben Breite des Lagerbereichs **5** spitz zusammenlaufen. An der unteren Kante des Schenkels **14** schließt sich ein von der Platte **11** weggebogener Einführschenkel **15** an. An den Außenkanten **18** des Schenkels **14** sind ferner oberhalb des Einführschenkels **15** nach innen abstehende Rasthaken **19** angeformt, deren Funktion bei der Beschreibung der Montagefolge erläutert wird.

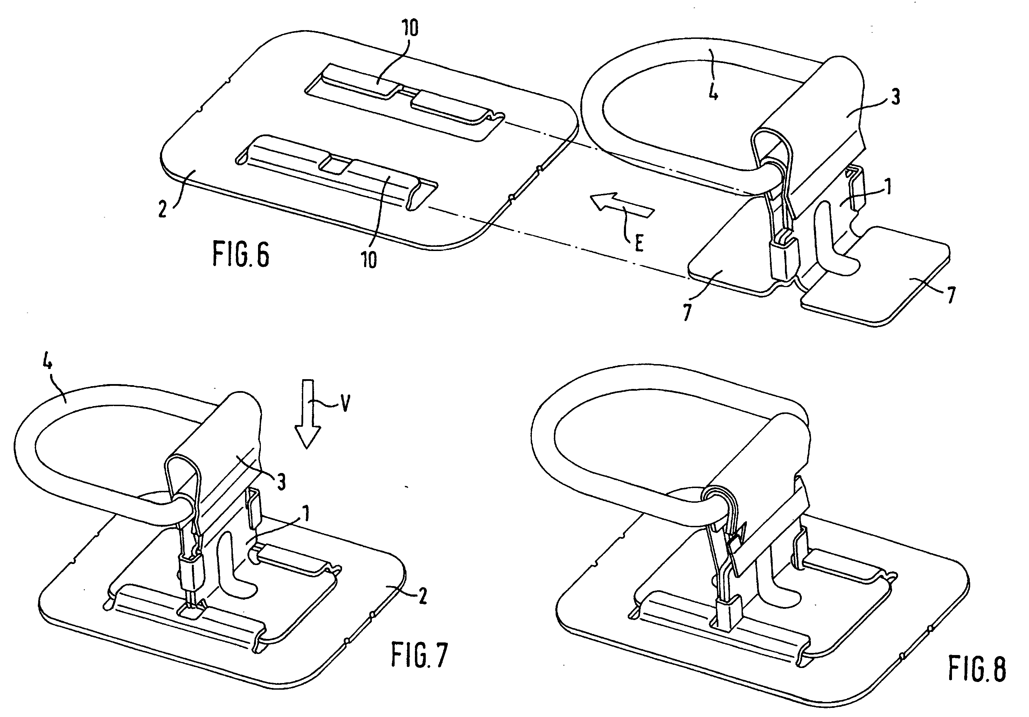

An den Außenkanten der Blechlappen **6** sind unterhalb des Lagerbereichs **5** Aussparungen **16** eingeschnitten, welche in Länge und Tiefe den Außenmaßen der Klemmschenkel **12** entsprechen. Durch diese Aussparungen **16** lassen sich die Klemmschenkel **12** der Verriegelungsklammer **3** bei der Vormontage auf die Haltelasche **1** leicht durchführen und dann über die Außenkanten der Blechlappen **6** herunterschieben, so dass die Blechlappen **6** nach der Einlagerung des Halterings **4** in den Lagerbereich **5**, wie aus **Fig. 6** ersichtlich, zusammengehalten werden.

Die Montagefolge ist in den **Figuren 5 bis 8** anschaulich dargestellt:

Nachdem der Haltering **4** mit seinem geradlinigen Teil **4'** durch elastisches Auseinanderbiegen der Blechlappen **6** in den Lagerbereich **5** und die Stützschalen **9** eingedrückt und eingelagert ist, werden die Blechlappen **6**, wie aus **Fig. 5** ersichtlich, zusammengedrückt. Sodann wird die Verriegelungsklammer **3** von oben auf die Haltelasche **1** heruntergeführt, bis die Klemmschenkel **12** die Höhe der Aussparungen **16** erreicht haben. Nun werden die Klemmschenkel **12** durch die Aussparung **16** bis zur Anlage der Platte **11** an dem Blechlappen **6** durchgeführt und über die Außenkanten der Blechlappen **6** abwärtsverschoben, bis der Einführschenkel **15** unterhalb des Lagerbereichs **5**, wie aus **Figur 6** ersichtlich, einen vorläufigen Halt gefunden hat.

Die Haltevorrichtung ist jetzt bereit zur Befestigung auf dem Halteblech **2**. Hierzu werden die Fußschenkel **7** in Richtung des Pfeiles "**E**" in die Führungsschienen **10** eingeschoben, bis die Haltelasche **1** die in **Figur 7** gezeigte Position erreicht hat. Sodann wird die Verriegelungsklammer **3** in Richtung des Pfeiles "**V**" heruntergedrückt, wobei die Klemmschenkel **12** in den Einschnitt **17** eintauchen und dadurch die Lage der Haltevorrichtung festgelegt ist. Bei der Gelegenheit tauchen die Rasthaken **19** in die Aussparung **16** ein und sichern damit die Verriegelungsklammer **3** in der Halteposition gegen unbefugtes Lösen (**Fig.8**).

Will man die Haltevorrichtung jedoch aus ihrer Verankerung herausnehmen, so muss man zunächst den Einführschenkel **15** soweit zurückbiegen, bis die Rasthaken **19** aus der Aussparung **16** freigehen. Sodann muss man die Verriegelungsklammer **3** nach oben schieben, bis die Klemmschenkel **12** sich über dem Einschnitt **17** befinden. Nunmehr kann die Haltelasche **1** entlang der Führungsschienen **10** herausgezogen werden, so dass die Haltevorrichtung wieder frei ist.

## Patentansprüche

1. Haltevorrichtung zur lösbaren Befestigung eines Halterings auf einer Trägerplatte, bestehend aus einer Haltelasche (1) mit zwei den Haltering (4) schwenkbar einlagemden, zusammenfaltbaren Blechlappen (6) und an den freien Enden rechtwinklig voneinander wegstrebenden Fußschenkeln (77), einem mit der Trägerplatte verbindbaren Halteblech (2) mit zwei aus der Blechebene ausgestanzten und entsprechend der Breite der Fußschenkel (7) hochgebogenen Führungsschienen (10) zum Einschieben der Fußschenkel (7) sowie einer die Außenkanten der zusammengefalteten Blechlappen (6) umfassenden und auf diesen verschieblichen Verriegelungsklammer (3).

2. Haltevorrichtung nach Anspruch 1, **dadurch gekennzeichnet, dass** die Führungsschienen (10) etwa in ihrer Mitte Einschnitte (17) aufweisen, in welche die die Außenkanten der Blechlappen (6) U-förmig umfassenden Klemmschenkel (12) der Verriegelungsklammer (3) nach dem Einschieben der Haltelasche (1) in die Führungsschienen (10) zur Sicherung der Halteposition einführbar sind.

3. Haltevorrichtung nach Anspruch 2, **dadurch gekennzeichnet, dass** die Verriegelungsklammer (3) an ihrem freien oberen Ende einen U-förmig zurückgebogenen Schenkel (14) aufweist, welcher sich in der Öffnungsstellung auf dem Lagerbereich (5) der Haltelasche (1) abstützt und in der Verriegelungsstellung diesen klemmend umfasst.

4. Haltevorrichtung nach Anspruch 2, **dadurch gekennzeichnet, daß** an den Außenkanten der Blechlappen (6) unterhalb des Lagerbereichs (5) Aussparungen (16) eingeschnitten sind, welche in Länge und Tiefe den Klemmschenkeln (12) der Verriegelungsklammer (3) entsprechen.

5. Haltevorrichtung nach Anspruch 3 oder 4, **dadurch gekennzeichnet, dass** der an den beiden Außenkanten (18) des zurückgebogenen Schenkels (14) nach innen abstehende Rasthaken (19) angeformt sind, welche nach dem Herunterdrücken der Verriegelungsklammer (3) in die Aussparungen (16) der Haltelasche (1) einrasten.

## Claims

1. A holding device for releasably fixing a holding ring on a support plate, comprising a holding plate (1) with two sheet metal tabs (6) which can be folded together and which pivotably enclose the holding ring (4) and at the free ends thereof base legs (7) which extend away from each other at a right angle thereto, a metal holding plate member (2) which can be connected to the support plate and having two guide rails (10) which are stamped out of the plane of the metal holding plate member and which are raised in a manner corresponding to the width of the base legs (7), for insertion of the base legs (7), and a locking clip (3) which embraces the outside edges of the folded-together sheet metal tabs (6) and is displaceable thereon.

2. A holding device according to claim 1 **characterised in that** the guide rails (10) approximately at the centre thereof have recesses (17) into which the. clamping legs (12) of the locking clip (3), which embrace the outside edges of the metal tabs (6) in a 10-shape, can be introduced after insertion of the holding plate (1) into the guide rails (10) for securing the holding position.

3. A holding device according to claim 2 **characterised in that** at its free upper end the locking clip (3) has a leg (14) which is bent back in a U-shape and which in the open position is supported on the mounting region (5) of the holding plate (1) and in the locking position clippingly embraces same.

4. A holding device according to claim 2 **characterised in that** cut in at the outside edges of the metal tabs (6) below the mounting region (5) are recesses (16) which correspond in length and depth to the clamping legs (12) of the locking clip (3).

5. A holding device according to claim 3 or claim 4 **characterised in that** formed on the two outside edges (18) of the bent-back leg (14) are inwardly projecting latching hooks (19) which latchingly engage into the recesses (16) in the holding plate (1) after the locking clip (3) is pressed down.

## Revendications

1. Dispositif de retenue pour la fixation détachable d'un anneau de retenue sur une plaque support, se composant d'une attache de retenue (1) comprenant deux languettes en tôle (6) repliables l'une contre l'autre enserrant l'anneau de retenue (4) en lui permettant de pivoter librement et, au niveau de leurs extrémités libres des pattes formant semelles (7) s'écartant l'une de l'autre selon une disposition en angle droit, une plaquette en tôle de retenue (2) destinée à être reliée à la plaque support, comprenant deux coulisses de guidage (10) réalisées par découpage à la presse dans la plaquette en tôle et repliées vers le haut dans une proportion correspondant à la largeur des pattes formant semelles (7), dans lesquelles les pattes formant semelles (7) sont destinées à être introduites, ainsi qu'une agrafe de verrouillage (3) enserrant les bords extérieurs des languettes en tôle (6) repliées l'une contre l'autre et emmanchée coulissante sur celles-ci.

2. Dispositif de retenue selon la revendication 1, **caractérisé en ce que** les coulisses de guidage (10) présentent au niveau de leur partie centrale des entailles (17) dans lesquelles les pattes de serrage (12) de l'agrafe de verrouillage (3), enserrant, selon une disposition en U, les bords extérieurs des languettes en tôle (6), sont destinées à être insérées, après l'introduction de l'attache de retenue (1) dans les coulisses de guidage (10), pour verrouiller la position de retenue.

3. Dispositif de retenue selon la revendication 2, **caractérisé en ce que** l'agrafe de verrouillage (3) comporte, au niveau de son extrémité supérieure libre, une patte (14) repliée vers l'arrière selon une disposition en U, qui prend appui, en position d'ouverture, sur la portée (5) de l'attache de retenue (1) et, en position de verrouillage, enserre celle-ci en exerçant en effet de blocage.

4. Dispositif de retenue selon la revendication 2, **caractérisé en ce que**, dans les bords extérieurs des languettes en tôle (6), sous la portée (5), des évidements (16) sont réalisés, dont la longueur et la profondeur correspondent aux pattes de serrage (12) de l'agrafe de verrouillage (3).

5. Dispositif de retenue selon la revendication 3 ou 4, **caractérisé en ce que** des crochets d'encastrement (19) faisant saillie vers l'intérieur sont réalisés solidaires par formage des deux bords extérieurs (18) de la patte (14) repliée vers l'arrière, qui, après que l'agrafe de verrouillage a été poussée en position, viennent s'encastrer dans les évidements (16) de l'attache de retenue (1).
